# EUROPEAN PATENT APPLICATION

(11) **EP 4 682 742 A1**
(43) Date of publication of application: **21.01.2026**
(21) Application number: 24769830.1
(22) Date of filing: 06.03.2024
(51) Int. Cl.: G06F 16/483

(54) **MULTIMEDIA CONTENT PROCESSING METHOD, APPARATUS AND DEVICE, AND STORAGE MEDIUM**

(30) Priority: 15.03.2023 CN 202310269671
(71) Applicant: Beijing Zitiao Network Technology Co., Ltd., Beijing 100190 (CN)
(72) Inventor: ZHAO, Jiarui, Beijing 100028 (CN); XU, Mengrong, Beijing 100028 (CN); CHEN, Rihao, Beijing 100028 (CN); LIU, Peizhi, Beijing 100028 (CN); PAN, Yucheng, Beijing 100028 (CN); ZHAO, Min, Beijing 100028 (CN); SHI, Tianwen, Beijing 100028 (CN); JU, Jinpeng, Beijing 100028 (CN); ZHANG, Xin, Beijing 100028 (CN); LIU, Sida, Beijing 100028 (CN)
(74) Representative: Grünecker Patent- und Rechtsanwälte PartG mbB
(86) International application number: PCT/CN2024/080413
(87) International publication number: WO 2024/188137

(57) **Abstract**

The present disclosure provides a method and a device, an apparatus and a storage medium for multimedia content processing, and the method comprises: firstly, displaying, on a first page, article content based on a first display style, where the article content is in a multimedia information stream; and then, transitioning from the first page to the second page in response to a preset trigger on the first page, and displaying, on the second page, article content based on a second display style, where the second display style is configured to display the article content in an image-text format. As can be seen, the embodiment of the present disclosure can support switching the same article content from a state of being automatically played and displayed based on the multimedia information stream to a state of being displayed in an image-text format, which enriches relevant display functions of article contents, so that browsing requirements of a user for different display states of the article content are met, and user experience is improved.

## Description

This application claims the priority of Chinese Patent Application No. 2023102696717, entitled "Method for multimedia content processing, Apparatus, Device, and Storage Medium" filed on March 15, 2023, which is incorporated herein by reference in its entirety.

### FIELD

The present disclosure relates to the field of data processing, and more particularly, to a method for multimedia content processing, apparatus, device and a storage medium.

### BACKGROUND

With the continuous development of multimedia content processing technology, people's requirements for functions related to multimedia contents are increasingly diversified. At present, display forms for multimedia content of long image-text type such as articles and image-text in short video software cannot meet browsing requirements of users.

Therefore, how to enrich relevant display functions of multimedia contents of long image-text type to meet the browsing requirements of a user for multimedia contents is an urgent technical problem to be solved at present.

### SUMMARY

Embodiments of the present disclosure provide a method for multimedia content processing.

In a first aspect, the present disclosure provides a method for multimedia content processing, include:
displaying, on a first page, article content based on a first display style, where the first display style is used to automatically play the article content, and the article content is in a multimedia information stream;
transitioning from the first page to a second page in response to a preset trigger on the first page, and displaying, on the second page, the article content based on a second display style, where the second display style is used to display the article content in an image-text format.

In an optional embodiment, the first page is provided with a progress bar component, and the method further includes:
adjusting, in response to a control operation for the progress bar component, a playback progress of the article content on the first page based on the control operation.

In an optional embodiment, the method further includes:
playing, in a process of displaying the article content on the first page, a voice file corresponding to the article content, where the voice file is generated based on the article content.

In an optional embodiment, the method further includes:
playing, in a process of displaying the article content on the first page, a background music file based on the first audio track;

Accordingly, playing the voice file corresponding to the article content includes:
playing the voice file corresponding to the article content based on a second audio track.

In an optional embodiment, transitioning from the first page to the second page in response to a preset trigger on the first page and displaying, on the second page, the article content based on a second display style includes:
acquiring, in response to a preset trigger on the first page, a playback progress of the article content on the first page, and transitioning from the first page to a second page; and
displaying, on the second page, the article content based on a second displaying style and according to a playback progress of the article content on the first page.

In an optional embodiment, transitioning from the first page to the second page further includes:
controlling, in response to the preset trigger on the first page, a display width of the article content on the first page to be dynamically adjusted to a preset width value, where the preset width value is a value of a display width for the article content on the second page.

In an optional embodiment, transitioning from the first page to the second page includes:
displaying, on the first page, a second page based on a preset first transparency;
adjusting the preset first transparency of the second page to a preset second transparency when acquiring a playback progress of the article content on the first page, and displaying the second page based on the preset second transparency.

In an optional embodiment, the method further includes:
acquiring, in response to a preset return operation on the second page, a display progress of the article content on the second page, and transitioning from the second page to the first page; and
displaying, on the first page, the article content based on a first display style and according to a display progress of the article content on the second page.

In a second aspect, the present disclosure provides an apparatus for multimedia content processing, including:
a first display module for displaying, on a first page, article content based on a first display style, where the first display style is used to automatically play the article content, and the article content is in a multimedia information stream;
a second display module for transitioning from the first page to a second page in response to a preset trigger on the first page and displaying, on the second page, the article content based on a second display style, where the second display style is used to display the article content in an image-text format.

In a third aspect, the present disclosure provides a computer-readable storage medium, the computer-readable storage medium stores instructions which, when executed on a terminal device, cause the terminal device to implement the foregoing method.

In a fourth aspect, the present disclosure provides a device for multimedia content processing, including: a memory, a processor, and a computer program stored in the memory and executable by the processor, where when the processor executes the computer program, the foregoing method is implemented.

In a fifth aspect, the present disclosure provides a computer program product, the computer program product includes a computer program/instructions which, when executed by a processor, cause the foregoing method to be implemented.

Compared with prior art, the technical solution provided by embodiments of the present disclosure has at least the following advantages:
embodiments of the present disclosure provide a method for multimedia content processing, which includes the following steps: firstly, displaying, on a first page, article content based on a first display style, where the article content is in a multimedia information stream; and then, transitioning from the first page to a second page in response to a preset trigger on the first page, and displaying, on the second page, article content based on a second display style, where the second display style is used to display article content in an image-text format. As can be seen, embodiments of the present disclosure can support switching the same article content from a state of being automatically played and displayed based on a multimedia information stream to a state of being displayed in an image-text format, which enriches relevant display functions of article contents, so that browsing requirements of a user for different display states of article content are met, and user experience is improved.

### BRIEF DESCRIPTION OF DRAWINGS

The drawings herein are incorporated in and constitute a part of the specification, illustrating embodiments consistent with the present disclosure and, together with the description, serve to explain the principles of the present disclosure.

In order to more clearly illustrate the technical solutions in the embodiments of the present disclosure or in prior art, the drawings needed to be used in the description of the embodiments or the prior art will be briefly introduced below, and it is obvious to those skilled in the art that other drawings may be acquired according to these drawings without creative efforts.
FIG. 1 is a flowchart of a method for multimedia content processing provided by an embodiment of the present disclosure;
FIG. 2 is a schematic diagram of a first page provided by an embodiment of the present disclosure;
FIG. 3 is a schematic diagram of another first page provided by an embodiment of the present disclosure;
FIG. 4 is a schematic diagram of a second page provided by an embodiment of the present disclosure;
FIG. 5 is a schematic structural diagram of an apparatus for multimedia content processing provided by an embodiment of the present disclosure; and
FIG. 6 is a schematic structural diagram of a multimedia content processing device provided by an embodiment of the present disclosure.

### DETAILED DESCRIPTION

In order to be able to more clearly understand the above objects, features and advantages of the present disclosure, the solutions of the present disclosure will be further described below. It should be noted that, in the case that no conflict occurs, features in the embodiments and embodiments of the present disclosure may be combined with each other.

Many specific details are set forth in the following description to facilitate a thorough understanding of the present disclosure, but the present disclosure may also be implemented in other ways than those described herein; apparently, embodiments in the specification are only a part of the embodiments of the present disclosure, not all embodiments.

With the continuous development of multimedia content processing technology, people's requirements for functions related to multimedia contents are increasingly diversified. At present, display forms for multimedia content of long image-text type such as articles and image-text in short video software cannot meet browsing requirements of users.

Therefore, how to enrich relevant display functions of multimedia contents of long image-text type to meet the browsing requirements of a user for multimedia contents is an urgent technical problem to be solved at present.

To this end, embodiments of the present disclosure provide a method for multimedia content processing, which includes the following steps: firstly, displaying, on a first page, article content based on a first display style, where the article content is in a multimedia information stream; and then, transitioning from the first page to a second page in response to a preset trigger on the first page, and displaying, on the second page, the article content based on a second display style, where the second display style is used to display the article content in an image-text format. As can be seen, embodiments of the present disclosure can support switching the same article content from a state of being automatically played and displayed based on a multimedia information stream to a state of being displayed in an image-text format, which enriches relevant display functions of article contents, so that browsing requirements of a user for different display states of article contents are met, and user experience is improved.

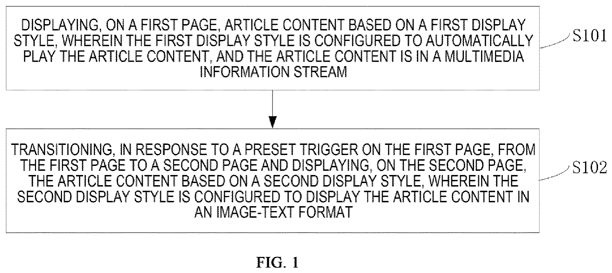

Based on this, embodiments of the present disclosure provide a method for multimedia content processing. With reference to the flowchart of the method for multimedia content processing provided by embodiments of the present disclosure in Fig. 1, the method includes the following steps.

S101: displaying, on a first page, article content based on a first display style.

In some embodiments, the first display style is used to automatically play the article content, and the article content is in a multimedia information stream.

In the embodiments of the present disclosure, the article content is in a multimedia information stream, and the article content may be any multimedia content in the multimedia information stream. In particular, article content may include text content, or may also include text content and picture content, etc.

In the embodiments of the present disclosure, the multimedia information stream may be any information stream including multimedia content such as text content, text and picture content, video content, audio content, or the like.

In the embodiment of the present disclosure, the first page is used to display the multimedia content in the multimedia information stream. In some embodiments, for the multimedia content of the article content, the first page may display the article content using the first display style.

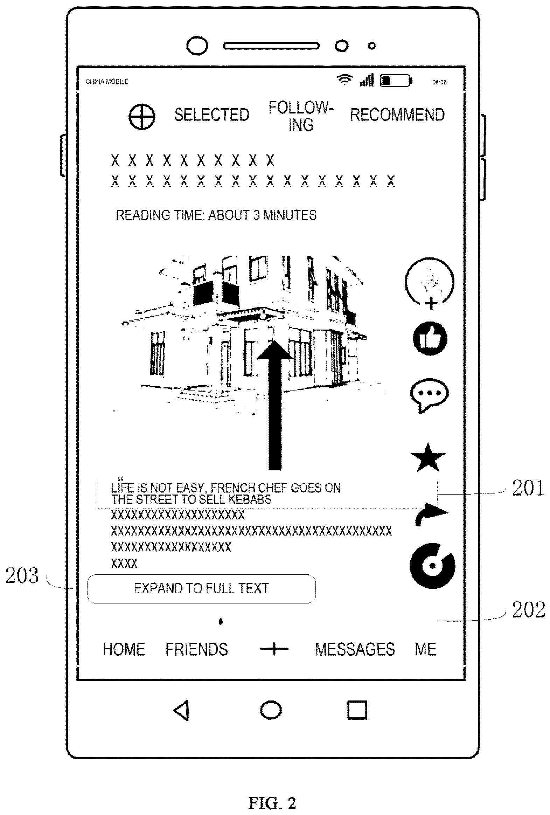

In an optional embodiment, in a process of displaying the article content on the first page based on the first display style, a scroll-up may be performed on the first page according to a preset scroll speed to display the article content. For example, a line-by-line scroll-up may be performed on the first page according to a preset scroll speed (for example, 20 lines/second) to display the article content. FIG. 2 is a schematic diagram of a first page provided by an embodiment of the present disclosure. It is assumed that at the first moment, the article content displayed on the first page includes a line of text content "life is not easy, French chef barbecues kebab on the street" displayed at a page display position 201.

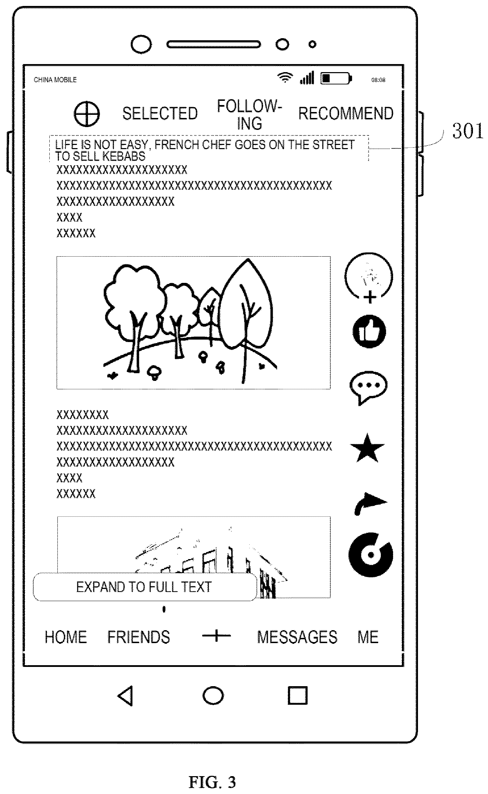

As shown in FIG. 2, an automatic scroll-up is performed at a preset scroll speed on the first page to display the article content, so that page display positions of the same line of text content at different moments are different. As shown in FIG. 3, which is a schematic diagram of another first page provided by an embodiment of the present disclosure, the line of text content "life is not easy, French chef barbecues kebab on the street" included in the article content is displayed at a page display position 301 at the second moment.

In addition, the display manner in which the first page displays the article content based on the first display style may further include a manner of automatically displaying the article content page by page according to a preset page turning speed, etc. The embodiments of the present disclosure do not limit the specific manner of automatically playing and displaying the article content based on the first display style.

In an optional embodiment, to facilitate the user to control the playback progress of the article content displayed on the first page, a progress bar component may be provided in the first display style, so that the user can conveniently adjust the playback progress of the article content based on the progress bar component.

In the embodiments of the present disclosure, when a control operation for the progress bar component on the first page is received, the playback progress of the article content on the first page is adjusted based on the control operation.

In the embodiments of the present disclosure, the control operation for the progress bar component may include a drag-to-the-left operation, a drag-to-the-right operation, a pause-playing operation, a continue-playing operation, a double-speed-playing operation, and the like on the progress bar component.

S102: transitioning from the first page to a second page in response to a preset trigger on the first page, and displaying, on the second page, the article content based on a second display style.

In some embodiments, the second display style is used to display the article content in an image-text format.

In the embodiments of the present disclosure, the preset trigger on the first page may include a preset sliding operation on the first page, or may include a trigger for a preset control on the first page. In some embodiments, the trigger for the preset control may include a click operation, a long-press operation, and the like.

In the embodiments of the present disclosure, when a preset trigger on the first page is received, a switch from the first page to the second page is performed, and the article content is displayed on the second page using the second display style. Specifically, displaying the article content in an image-text format using the second display style has a different effect from displaying the article content using the first display style.

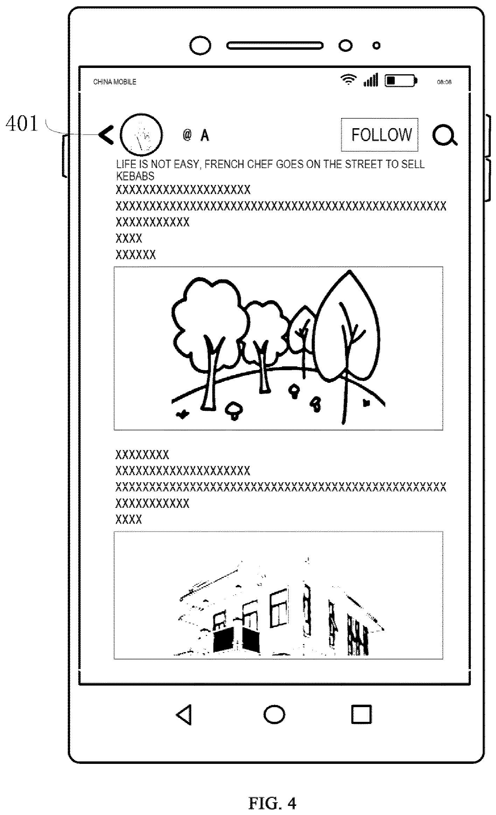

As shown in FIG. 2, in a process of displaying, on the first page, the article content based on the first display style, if a trigger for a preset control 203 on the first page is received, a transition from the first page shown in FIG. 2 to the second page is performed, and the article content is displayed on the second page based on the second display style. As shown in FIG. 4, which is a schematic diagram of a second page provided by an embodiment of the present disclosure, the second display style is used to display the article content in an image-text format.

In practical applications, a display typeface showing "full text display" may also be displayed on the preset control 203, to prompt that the user can trigger a transition from the first page to the second page through a trigger for the preset control, and trigger the display of the article content in the image-text format, thereby improving the user experience.

In an optional embodiment, when the article content is displayed on the second page based on the second display style, the user may trigger a sliding display of article content through a preset sliding operation on the second page, so that the user can browse the entire content in the article content. In some embodiments, the preset sliding operation on the second page may include a slide-up operation, a slide-down operation, and the like.

In the method for multimedia content processing provided by the embodiment of the present disclosure, firstly, article content is displayed on the first page based on a first display style, where the article content is in the first multimedia information stream; and then, a transition from the first page to the second page is performed in response to a preset trigger on the first page, and article content is displayed on the second page based on the second display style, where the second display style is used to display article content in an image-text format. As can be seen, the embodiments of the present disclosure can support switching the same article content from a state of being played and displayed automatically based on a multimedia information stream to a state of being displayed in an image-text format, which enriches relevant display functions of article contents, so that browsing requirements of a user for different display states of multimedia contents are met, and user experience is improved.

In practical applications, in the process of transitioning from the first page to the second page, in order to improve the user's immersion in browsing the article content, when a preset trigger on the first page is received, a playback progress of the article content on the first page is first acquired, and then a transition from the first page to the second page is performed, and on the second page, the article content is displayed based on the second display style and according to the playback progress of the article content on the first page.

For example, as shown in FIG. 3, when a preset trigger on the first page is received, the playback progress of the article content on the first page is acquired, and assuming that the first line on the first page is displaying a line of text content "life is not easy, French chef barbecues kebab on the street" in the article content, the playback progress of the article content on the first page is determined based on the line of text content. Then, after a transition from the first page shown in FIG. 3 to the second page shown in FIG. 4 is performed, the article content is displayed on the second page based on the second display style and according to the playback progress of the article content on the first page. Specifically, display of the article content is continued from the line of text content "life is not easy, French chef barbecues kebab on the street" in the article content on the second page based on the second display style.

In practical applications, in the process of displaying the article content on the second page, the user may acquire a display progress of the article content on the second page by a preset return operation on the second page, and transition from the second page to the first page. On the first page, based on the first display style and according to the display progress of the article content on the second page, display of the article content is continued.

In the embodiments of the present disclosure, the preset return operation on the second page may include a slide-to-the-left operation and the like on the second page. In addition, a return control may also be provided on the second page. Therefore, the preset return operation on the second page may further include a click operation etc. on the return control.

As shown in FIG. 4, upon receiving a click operation on the return control 401 on the second page, the display progress of the article content on the second page is acquired, and a transition from the second page shown in FIG. 4 to the first page shown in FIG. 3 is performed. On the first page, based on the first display style and according to the display progress of the article content on the second page, display of the article content is continued.

In an optional embodiment, in order to reduce the sense of discontinuity generated when transitioning from the first page to the second page and further improve the user experience, and in the process of transitioning from the first page to the second page, an animation that can produce an effect of reducing the sense of discontinuity is displayed

Specifically, when a preset trigger on the first page is received, firstly, a play progress of the article content on the first page is acquired, and the display width of the article content on the first page is controlled to be dynamically adjusted to a preset width value. Then, a transition from the first page to the second page is performed, and on the second page, display of the article content is continued based on the second display style and according to the playback progress of the article content on the first page. In some embodiments, the preset width value is a value of a display width for the article content on the second page.

Since in the process of transitioning from the first page to the second page, the display width of the article content on the first page is controlled to be dynamically adjusted to a value of the display width for the article content on the second page, the sense of discontinuity brought to the user by page transitioning can be reduced and user experience is improved.

For example, as shown in FIG. 3, the value of the display width of the article content on the first page is 150 px (pixels), when a preset trigger on the first page is received, a playback progress of the article content on the first page is acquired, and a display width of the article content is controlled to be dynamically adjusted from 150 px to a preset width value (assumed to be 170 px). In some embodiments, the preset width value is a value of a display width for the article content on the second page. Then, a transition from the first page shown in FIG. 3 to the second page shown in FIG. 4 is performed, and display of the article content is continued based on the second display style and according to the playback progress of the article content on the first page.

In an optional embodiment, in order to further improve the user experience, the manner of transitioning from the first page to the second page may further include: in response to a preset trigger on the first page, firstly, acquiring a playback progress of the article content on the first page, and displaying a second page on the first page based on a preset first transparency; and then, when acquiring the playback progress of the article content on the first page, adjusting the preset first transparency of the second page to a preset second transparency, and displaying the second page based on the preset second transparency.

In some embodiments, a value of the preset first transparency and a value of the preset second transparency are different values, and the value of the first transparency is much larger than the value of the second transparency. For example, the value of the preset first transparency may be set to 100%, and the value of the preset second transparency may be set to 10%.

For example, when a preset trigger on the first page by the user is received, a playback progress of the article content on the first page is acquired, and the second page is displayed on the first page with the transparency of 100%. In other words, the second page is hidden from the first page, and when the playback progress of the article content on the first page is acquired, the transparency of the second page is adjusted from 100% to 10%, so that the second page is completely displayed on the first page, thus the effect of smoothly switching from the first page to the second page is achieved, and the user experience is further improved.

In another optional embodiment, in order to reduce the sense of discontinuity generated when a transition from the first page to the second page is performed, when a preset trigger on the first page is received, firstly, the display width of the article content on the first page is controlled to be dynamically adjusted to a preset width value, and then a playback progress of the article content on the first page is acquired, and the second page is displayed on the first page based on the preset first transparency. After acquiring the playback progress of the article content on the first page, the article content is displayed on the second page based on the second display style and according to the playback progress of the article content on the first page, and a preset first transparency of the second page is adjusted to a preset second transparency, and then the second page is displayed on the preset second transparency. As can be seen, the embodiments of the present disclosure can reduce the sense of discontinuity generated when a transition from the first page to the second page is performed and thus further improve the user experience from three directions, i.e., playback progress, the display width and transparency.

In practical applications, in the process of displaying article content on the first page, a voice file corresponding to the article content may be played to further enrich the display function for multimedia content and improve the user experience.

In the embodiments of the present disclosure, the voice file may be generated based on article content. Specifically, the voice file may be a file read by human voice generated based on the article content. For example, the article content may be converted into a voice file by using the text-to-speech function of a neural network. The method for converting text information into a voice file is not limited in the embodiments of the present disclosure, and in actual application, the method may be determined based on demand.

In an optional embodiment, in order to further enrich the display function for multimedia content, in the process of displaying the article content on the first page, a background music file corresponding to the article content may also be played.

In an optional embodiment, in the process of displaying the article content on the first page, the background music file and the voice file corresponding to the article content may be played based on the same audio track, to enrich the display function for multimedia content on the first page.

In practical applications, in the process of displaying the article content on the first page and playing the background music file and the voice file corresponding to the article content based on the same audio track, when a control operation of the user for the progress bar component on the first page is received and based on the control operation, the playback progresses of the article content and the voice file on the first page are adjusted, since the background music file and the voice file are on the same audio track, the playback progress of the background music file will be changed correspondingly when the playback progress of the voice file is adjusted, which will affect user experience.

Based on the foregoing embodiment, in order to not change the playback progress of the background music file while adjusting the playback progress of the voice file, the embodiments of the present disclosure may play the voice file and the background music file corresponding to the article content based on different audio tracks, thereby implementing a function of controlling the voice file separately from the background music file.

Specifically, the background music file is played based on the first audio track, and the voice file corresponding to the article content is played based on the second audio track. In some embodiments, the second audio track and the first audio track are two different audio tracks.

In practical applications, since the background music file is played based on an audio track different from the audio track based on which the voice file is played, the playback progress of the background music file may be controlled separately from the playback progress of the voice file. In addition, the control of the playback progress of displaying the article content by using the first display style may also be independent of the foregoing two audio tracks.

In the embodiment of the present disclosure, in the process of displaying the article content on the first page, the background music file and the voice file corresponding to the article content can be played based on different audio tracks, which realizes a function of controlling the voice file separately from the background music file, so that the display function for the article content is further enriched, and user experience is improved.

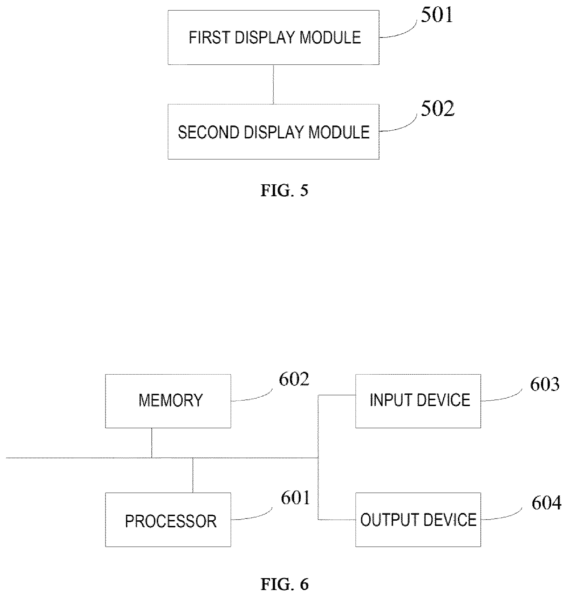

Based on the foregoing method embodiments, the present disclosure further provides an apparatus for multimedia content processing. Referring to FIG. 5, which is a schematic structural diagram of an apparatus for multimedia content processing provided by an embodiment of the present disclosure, the apparatus includes:
a first display module 501 for displaying, on the first page, article content based on a first display style, where the first display style is used to automatically play the article content, and the article content is in a multimedia information stream.
a second display module 502 for transitioning from the first page to a second page in response to a preset trigger on the first page, and display, on the second page, the article content based on a second display style, where the second display style is used to display the article content in an image-text format.

In an optional embodiment, the first display style is provided with a progress bar component, and the apparatus further includes:
a progress adjusting module for adjusting, in response to a control operation for the progress bar component, a playback progress of the article content on the first page based on the control operation.

In an optional embodiment, the apparatus further includes:
a voice playing module that plays a voice file corresponding to the article content in a process of displaying the article content on the first page, where the voice file is generated based on the article content.

In an optional embodiment, the apparatus further includes:
a background music playing module that plays a background music file based on a first audio track in a process of displaying the article content on the first page.

Accordingly, the voice playing module includes:
a voice playing sub-module for playing the voice file corresponding to the article content based on the second audio track.

In an optional embodiment, the second display module includes:
a transitioning sub-module for acquiring, in response to a preset trigger on the first page, a playback progress of article content on the first page and transitioning from the first page to a second page; and
a displaying sub-module for displaying, on the second page, the article content based on the second display style and according to a playback progress of the article content on the first page.

In an optional embodiment, the second display module further includes:
a width adjustment sub-module for controlling, in response to the preset trigger on the first page, a display width of the article content on the first page to be dynamically adjusted to a preset width value, where the preset width value is a value of a display width for the article content on the second page.

In an optional embodiment, the second display module includes:
a first display sub-module for displaying a second page on the first page based on a preset first transparency; and
a second display sub-module for adjusting the preset first transparency of the second page to a preset second transparency when the playback progress of the article content on the first page is acquired, and displaying the second page based on the preset second transparency.

In an optional embodiment, the second display module further includes:
a transitioning sub-module for acquiring, in response to a preset return operation on the second page, a display progress of article content on the second page and transitioning from the second page to the first page; and
a display sub-module for displaying, on the first page, the article content based on a first display style and according to a display progress of the article content on the second page.

In the apparatus for multimedia content processing provided by the embodiments of the present disclosure, firstly, article content is displayed on a first page based on a first display style, where the article content is in a multimedia information stream; then, in response to a preset trigger on the first page, a transition from the first page to the second page is performed, and the article content is displayed on the second page based on the second display style, where the second display style is used to display the article content in an image-text format. As can be seen, the embodiments of the present disclosure can support switching the same article content from a state of being automatically played and displayed based on a multimedia information stream to a state of being displayed in an image-text format, which enriches relevant display functions of article contents, so that the browsing requirements of a user for different display states of multimedia contents are met, and user experience is improved.

In addition to the foregoing method and apparatus, an embodiments of the present disclosure further provide a computer-readable storage medium, where the computer-readable storage medium stores instructions which, when executed on a terminal device, cause the terminal device to implement the method for multimedia content processing described in the embodiments of the present disclosure.

An embodiments of the present disclosure further provide a computer program product, where the computer program product includes a computer program/instruction which, when executed by a processor, implements the method for multimedia content processing described in the embodiments of the present disclosure is.

In addition, an embodiment of the present disclosure further provides a multimedia content processing device, as shown in FIG. 6, which may include:
a processor 601, a memory 602, an input apparatus 603, and an output apparatus 604. There may be one or more processors 601 in the multimedia content processing device, and one processor is taken as an example in FIG. 6. In some embodiments of the present disclosure, the processor 601, the memory 602, the input apparatus 603, and the output apparatus 604 may be connected by a bus or another manner, and connection by a bus is taken as an example in FIG. 6.

The memory 602 may be used to store software programs and modules, and the processor 601 perform various functional applications and data processing of the multimedia content processing device by executing software programs and modules stored in the memory 602. The memory 602 may mainly include a program storage area and a data storage area, where the program storage area may store an operating system, an application program required by at least one function, and the like. In addition, the memory 602 may include a high-speed random access memory, and may also include a non-volatile memory, such as at least one magnetic disk storage device, a flash memory device, or another volatile solid-state storage device. The input device 603 may be used to receive input numeric or character information and generate signal input related to user setting and function control of the multimedia content processing device.

Specifically, in the present embodiment, the processor 601 will load the executable file(s) corresponding to the process of one or more application programs into the memory 602 according to the following instructions, and execute the application program stored in the memory 602 by the processor 601, thereby implementing various functions of above multimedia content processing device.

It should be noted that, in this specification, relationship terms such as "first", "second", etc. are merely used to distinguish one entity or operation from another entity or operation, and do not necessarily require or imply that any such actual relationship or sequence exists among these entities or operations. Moreover, terms "include", "comprise" or any other variation thereof are intended to cover a non-exclusive inclusion, such that a process, method, article, or apparatus comprising a series of elements includes not only those elements, but also other elements not expressly listed, or elements inherent to such a process, method, article, or apparatus. Without further limitation, an element defined by a statement "include one" does not preclude the presence of additional identical elements in the process, method, article, or device that includes the element.

Only specific embodiments of the present disclosure are described as above, so that those skilled in the art can understand or implement the present disclosure. Various modifications to these embodiments will be apparent to those skilled in the art, and the general principles defined herein may be implemented in other embodiments without departing from the spirit or scope of the present disclosure. Accordingly, the present disclosure will not be limited to these embodiments described herein, but accords with the widest scope consistent with the principles and novel features disclosed herein.

## Claims

1. A method for multimedia content processing, **characterized in that** the method comprises:
displaying, on a first page, article content based on a first display style, wherein the first display style is configured to automatically play the article content, and the article content is in a multimedia information stream; and
transitioning, in response to a preset trigger on the first page, from the first page to a second page and displaying, on the second page, the article content based on a second display style, wherein the second display style is configured to display the article content in an image-text format.

2. The method of claim 1, **characterized in that** the first page is provided with a progress bar component, and the method further comprises:
adjusting, in response to a control operation for the progress bar component, a playback progress of the article content on the first page based on the control operation.

3. The method of claim 1, **characterized in that** the method further comprises:
in a process of displaying the article content on the first page, playing a voice file corresponding to the article content, wherein the voice file is generated based on the article content.

4. The method of claim 3, **characterized in that** the method further comprises:
in the process of displaying the article content on the first page, playing a background music file based on a first audio track; and
correspondingly, playing the voice file corresponding to the article content comprises:
playing the voice file corresponding to the article content based on a second audio track.

5. The method of claim 1, **characterized in that** transitioning, in response to the preset trigger on the first page, from the first page to the second page and displaying, on the second page, the article content based on the second display style comprises:
acquiring, in response to the preset trigger on the first page, a playback progress of the article content on the first page, and transitioning from the first page to the second page; and
displaying, on the second page, the article content based on the second display style and the playback progress of the article content on the first page.

6. The method of claim 5, **characterized in that** before transitioning from the first page to the second page, the method further comprises:
in response to the preset trigger on the first page, controlling a display width of the article content on the first page dynamically adjusted to a preset width value, wherein the preset width value is the display width for the article content on the second page.

7. The method of claim 5 or 6, **characterized in that** transitioning from the first page to the second page comprises:
displaying a second page on the first page based on a preset first transparency; and
adjusting, in response to acquiring the playback progress of the article content on the first page, the preset first transparency of the second page to a preset second transparency, and displaying the second page based on the preset second transparency.

8. The method of claim 5, **characterized in that** the method further comprises:
acquiring, in response to a preset return operation on the second page, a display progress of the article content on the second page, and transitioning from the second page to the first page; and
displaying, on the first page, the article content based on the first display style and the display progress of the article content on the second page.

9. An apparatus for multimedia content processing, **characterized in that** the apparatus comprises:
a first display module for displaying, on a first page, article content based on a first display style, wherein the first display style is configured to automatically play the article content, and the article content is in a multimedia information stream; and
a second display module, for transitioning, in response to a preset trigger on the first page, from the first page to a second page, and displaying, on the second page, the article content based on a second display style, wherein the second display style is configured to display the article content in an image-text format.

10. A computer-readable storage medium, **characterized in that** the computer-readable storage medium stores thereon instructions which, when executed on a terminal device, cause the terminal device to implement the method of any of claims 1 to 8.

11. A device for multimedia content processing, **characterized by** comprising: a memory, a processor, and a computer program stored on the memory and executable by the processor, wherein the processor implements the method of any of claims 1 to 8 when executing the computer program.
